# EUROPÄISCHE PATENTSCHRIFT

(11) **EP 2 785 783 B1**
(45) Veröffentlichungstag und Bekanntmachung des Hinweises auf die Patenterteilung: **28.09.2016**
(21) Anmeldenummer: 12794957.6
(22) Anmeldetag: 30.11.2012
(51) Int. Cl.: C08K 5/42, C08K 7/14, C08L 69/00, C08L 23/08

(54) **ETHYLEN-PROPYLEN-MALEINSÄUREANHYDRID-COPOLYMER ALS SCHLAGZÄHMODIFIKATOR IN GLASFASERVERSTÄRKTEN FR-POLYCARBONATEN FÜR DEN EE-BEREICH**
ETHYLENE-PROPYLENE-MALEIC ACID ANHYDRIDE COPOLYMER AS IMPACT MODIFIER IN GLASS-FIBER REINFORCED, FLAME-RETARDANT POLYCARBONATES FOR THE EE SECTOR
COPOLYMÈRE ÉTHYLÈNE-PROPYLÈNE-ANHYDRIDE D'ACIDE MALÉIQUE EN TANT QUE MODIFICATEUR DE LA RÉSILIENCE DANS DES POLYCARBONATES IGNIFUGES RENFORCÉS DE FIBRES DE VERRE DESTINÉS AU SECTEUR EE

(30) Priorität: 30.11.2011 EP 11191242
(43) Veröffentlichungstag der Anmeldung: 08.10.2014
(73) Patentinhaber: Covestro Deutschland AG, 51373 Leverkusen (DE)
(72) Erfinder: ERKELENZ, Michael, 47239 Duisburg (DE); FRANSSEN, Hans, 47809 Krefeld (DE); HEUER, Helmut Werner, 51371 Leverkusen (DE)
(74) Vertreter: Levpat
(86) Internationale Anmeldenummer: PCT/EP2012/074033
(87) Internationale Veröffentlichungsnummer: WO 2013/079634

(56) Entgegenhaltungen:
- JP-A- 55 157 648
- US-A- 4 420 584
- US-A- 5 783 620
- US-A1- 2005 256 227

## Beschreibung

Die vorliegende Erfindung betrifft schlagzähmodifizierte glasfaserverstärkte Polycarbonatzusammensetzungen mit hoher Steifigkeit, verbessertem thermischen und rheologischem Verhalten in Kombination mit guten Flammschutzeigenschaften. Weiterhin betrifft die vorliegende Erfindung die Verwendung der erfindungsgemäßen Zusammensetzungen zur Herstellung von dünnwandigen Gehäuseteilen oder Schalterkästen im EE-Bereich.

Diese Formmassen eignen sich insbesondere für Bauteile, die bei einer Wandstärke von 1,0 mm die Brandschutzklassifikation UL94 V0 erfüllen.

Aus JP3212468 sind zum einen nicht-flammgeschützte Polycarbonat-Zusammensetzungen aus 45-97 Gew.% eines aromatischen Polycarbonatharzes mit 3-55 Gew.-% eines anorganischen Füllstoffes (Glasflocken, Metallfolcken, Mica oder Talk) und 0.02-3 Gew.-% eines olefinischen Wachses, das carboxylische Gruppen oder Derivate hiervon enthält, bekannt. Zum anderen werden Zusammensetzungen beschrieben, die 7-96 Gew.% eines aromatischen Polycarbonatharzes und 1-90 Gew.-% eines olefinischen Pfropfpolymers mit 3-55 Gew.-% eines anorganischen Füllstoffes (Glasflocken, Metallfolcken, Mica oder Talk) und 0.02-3 Gew.-% des o.g. olefinischen Wachses, enthalten.

Aufgabe der vorliegenden Erfindung war es somit schlagzähmodifizierte glasfaserverstärkte Polycarbonatzusammensetzungen mit einer Kombination aus hoher Steifigkeit und Zähigkeit in axialem und biaxialem Verhalten, gutem thermischen und rheologische Verhalten und einer Flammwidrigkeit von UL94 V0 bei 1,0 mm Wandstärke bereitzustellen, die die Nachteile der aus dem Stand der Technik bekannten Zusammensetzungen nicht aufweisen, insbesondere nicht den üblichen Verlust der durch Zugabe von Glasfasern hervorgerufenen Zähigkeit oder aber den Verlust des Flammschutzes bei Zugabe notwendiger hoher Mengen eines Schlagzähmodifikators.

Überraschenderweise wurde nun gefunden, dass die oben genannten Eigenschaften erhalten werden, wenn ein kautschukfreies anhydridmodifiziertes alpha-Olefin-Terpolymer als Schlagzähmodifikator in Verbindung mit einer spezifischen Flammschutzmittelkombination und mit spezifischen Glasfasern in Polycarbonatzusammensetzungen eingesetzt wird.

Die so zusammengesetzten Formmassen zeichnen durch gute mechanische Eigenschaften sowie eine gute Zähigkeit und gutes rheologisches und thermisches Verhalten bei verbesserter Flammwidrigkeit aus.

Gegenstand der Erfindung sind flammwidrige, thermoplastische Formmassen enthaltend
A) 41,500 bis 94,749 Gew.-Teile, vorzugsweise 60,000 bis 93,000 Gew.-Teile, besonders bevorzugt 74,000 bis 92,500 Gew.-Teile mindestens eines aromatischen Polycarbonats,
B) 0,001 bis 1,000 Gew.-Teile, bevorzugt 0,050 bis 0,800 Gew.-Teile, weiter bevorzugt 0,100 bis 0,600 Gew.-Teile, besonders bevorzugt 0,100 bis 0,300 Gew.-Teile, mindestens eines Flammschutzmittels, ausgewählt aus der Gruppe der Alkalisalze von aliphatischen/aromatischen Sulfonsäure-, Sulfonamid- und Sulfonimidderivaten sowie der Erdalkalisalze von aliphatischen/aromatischen Sulfonsäure-, Sulfonamid- und Sulfonimidderivaten, Natrium- oder Kaliumperfluorbutansulfat, Natrium- oder Kaliumperfluoroctansulfat, Natrium- oder Kalium-2,5-dichlorbenzolsulfat, Natrium- oder Kalium-2,4,5-trichlorbenzolsulfat, Natrium- oder Kaliummethylphosphonat, Natrium- oder Kalium-(2-phenylethylen)-phosphonat, Natrium- oder Kaliumpentachlorbenzoat, Natrium- oder Kalium-2,4,6-trichlorbenzoat, Natrium- oder Kalium-2,4-dichlorbenzoat, Lithiumphenylphosphonat, Trinatrium- oder Trikaliumhexafluoroaluminat, Dinatrium- oder Dikaliumhexafluorotitanat, Dinatrium- oder Dikalium-hexafluorosilikat, Dinatrium- oder Dikaliumhexafluorozirkonat, Natrium- oder Kaliumpyrophosphat, Natrium- oder Kaliummetaphosphat, Natrium- oder Kaliumtetrafluoroborat, Natrium- oder Kaliumhexafluorophosphat, Natrium- oder Kalium- oder Lithiumphosphat,
C) 0,20 bis 1,50 Gew.-Teilen, bevorzugt 0,20 bis 1,00 Gew.-Teilen, weiter bevorzugt 0,25 bis 0,90 Gew.-Teilen, weiter bevorzugt von 0,30 bis 0,70 Gew.-Teilen, besonders bevorzugt von 0,40 bis 0,60 Gew.-Teilen, mindestens eines kautschukfreien anhydridmodifizierten alpha-Olefin-Terpolymers,
D) 5,0 bis 40,0 Gew.-Teilen, bevorzugt 6,0 bis 30,0 Gew.-Teilen, weiter bevorzugt 7,0 bis 20,0 Gew.-Teilen, mindestens einer Glasfaser,
E) 0,00 Gew.-Teile bis 1,00 Gew.-Teile, weiter bevorzugt 0,10 Gew.-Teile bis 0,75 Gew.-Teile, besonders bevorzugt 0,15 Gew.-Teile bis 0,60 Gew.-Teile, und ganz besonders bevorzugt 0,20 Gew.-Teile bis 0,50 Gew.-Teile mindestens eines Entformungsmittels,
F) 0,05 Gew.% bis 5,00 Gew.%, bevorzugt 0,10 Gew.% bis 1,00 Gew.%, besonders bevorzugt 0,10 Gew.% bis 0,80 Gew.% mindestens eines Antidrippingmittels, berechnet auf reines PTFE..
G) 0 bis 10,00 Gew.-Teile, bevorzugt 0,10 bis 8,00 Gew.-Teile, besonders bevorzugt 0,20 bis 3,00 Gew.-Teile weitere übliche Additive, ausgewählt aus der Gruppe der Antioxidantien, Thermostabilisatoren, optischen Aufheller und Lichtstreumittel,
wobei die Summe der Gewichtsteile der Komponenten A) bis G) sich zu 100 Gewichtsteilen addiert.

In einer bevorzugten Ausführungsform besteht die Zusammensetzung aus den Komponenten A) - G).

In einer bevorzugten Ausführungsform ist die Zusammensetzung frei von Entformungsmitteln, weiter bevorzugt enthält sie stattdessen UV-Absorber.

Ferner können in der vorliegenden Erfindung genannten bevorzugte Ausführungsformen miteinander kombiniert werden und sind nicht ausschließlich als alleinstehende Modifikation anzusehen. Komponente A)

Polycarbonate im Sinn der vorliegenden Erfindung sind sowohl Homopolycarbonate als auch Copolycarbonate; die Polycarbonate können in bekannter Weise linear oder verzweigt sein.

Die Herstellung der Polycarbonate erfolgt in bekannter Weise aus Diphenolen, Kohlensäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne, BAYER AG, "Polycarbonates" in Encyclopedia of Polymer Science and Engineering, Volume 11, Second Edition, 1988, Seiten 648-718 und schliesslich auf Dres. U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Für die Herstellung der Polycarbonate geeignete Diphenole sind beispielsweise Hydrochinon, Resorcin, Dihydroxydiphenyle, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, alpha - alpha '-Bis-(hydroxyphenyl)-diisopropylbenzole, Phtalimidine abgeleitet von Isatin- oder Phenolphthaleinderivaten sowie deren kernalkylierte, kernarylierte und kernhalogenierte Verbindungen.

Bevorzugte Diphenole sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-3,3,5-trimethylcyclohexan.

Besonders bevorzugte Diphenole sind 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan.

Diese und weitere geeignete Diphenole sind z.B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2063 050, DE-A 2 036 052, DE-A 2 211 956 und DE-A 3 832 396, in FR-A 1 561 518, in der Monographie "H. Schnell, Chemistry and Physics of Polycarbonates, Interscience Publishers, New York 1964" sowie in JP-A 62039/1986, JP-A 62040/1986 und JP-A 105550/1986 beschrieben.

Im Fall der Homopolycarbonate ist nur ein Diphenol eingesetzt, im Fall der Copolycarbonate sind mehrere Diphenole eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind sowohl Monophenole als auch Monocarbonsäuren. Geeignete Monophenole sind beispielsweise Phenol selbst, Alkylphenole wie Kresole, p-tert.-Butylphenol, Cumylphenol, p-n-Octylphenol, p-iso-Octylphenol, p-n-Nonylphenol und p-iso-Nonylphenol, Halogenphenole wie p-Chlorphenol, 2,4-Dichlorphenol, p-Bromphenol und 2,4,6-Tribromphenol, 2,4,6-Trijodphenol, p-Jodphenol, sowie deren Mischungen.

Bevorzugte Kettenabbrecher sind ferner die Phenole welche ein oder mehrfach mit C1 bis C30-Alkylresten, linear oder verzweigt, bevorzugt unsubstituiert oder mit tert.-Butyl substituiert sind. Besonders bevorzugte Kettenabbrecher sind Phenol, Cumylphenol und/oder p-tert.-Butylphenol.

Geeignete Monocarbonsäuren sind weiterhin Benzoesäure, Alkylbenzoesäuren und Halogenbenzoesäuren.

Die Menge an einzusetzendem Kettenabbrecher beträgt bevorzugt 0,1 bis 5 Mol%, bezogen auf Mole an jeweils eingesetzten Diphenolen. Die Zugabe der Kettenabbrecher kann vor, während oder nach der Umsetzung mit einem Kohlesäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri(4-hydroxyphenyl)-heptan, 1,3,5-Tri(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenylisopropyl)-phenol, 2,6-Bis-(2-hydroxy-5'-methyl-benzyl)-4-methylphenol, 2-(4-hydroxyphenyl)-2-(2,4-dihydroxyphenyl)-propan, Hexa-(4(4-hydroxyphenylisopropyl)-phenyl)-orthoterephthalsäureester, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol%, bezogen wiederum auf Mole an jeweils eingesetzten Diphenolen.

Die Verzweiger können entweder mit den Diphenolen und den Kettenabbrechern in der wässrig alkalischen Phase vorgelegt werden, oder in einem organischen Lösungsmittel gelöst vor der Phosgenierung zugegeben werden. Im Fall des Umesterungsverfahrens werden die Verzweiger zusammen mit den Diphenolen eingesetzt.

Die aromatischen Polycarbonate der vorliegenden Erfindung besitzen Gewichtsmittelmolekulargewichte Mw (ermittelt durch Gelpermeationschromatographie und Eichung mit Polycarbonatstandard) zwischen 5000 und 200.000 g/mol, vorzugsweise zwischen 18.000-36.000 g/mol, weiter bevorzugt zwischen 22.000-34.000 g/mol, noch weiter bevorzugt zwischen 24.000-32.000 g/mol, und besonders bevorzugt zwischen 26.000-32.000 g/mol.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

### Komponente B)

Geeignete Flammschutzmittel im Sinne der vorliegenden Erfindung sind unter anderem Alkali- bzw. Erdalkalisalze von aliphatischen bzw. aromatischen Sulfonsäure-, Sulfonamid- und Sulfonimidderivaten z.B. Kaliumperfluorbutansulfonat, Kaliumdiphenyl-sulfonsulfonat, N-(p-tolylsulfonyl-)-p-toluolsulfimid-Kaliumsalz, N-(N'-Benzylaminocabonyl)-sulfanylimid-Kaliumsalz.

Weitere Salze, die in den erfindungsgemäßen Formmassen verwendet werden können, sind: Natrium- oder Kaliumperfluorbutansulfat, Natrium- oder Kaliumperfluormethansulfonat, Natrium-oder Kaliumperfluoroctansulfat, Natrium- oder Kalium-2,5-dichlorbenzolsulfat, Natrium- oder Kalium-2,4,5-trichlorbenzolsulfat, Natrium- oder Kaliummethylphosphonat, Natrium- oder Kalium-(2-phenyl-ethylen)-phosphonat, Natrium- oder Kaliumpentachlorbenzoat, Natrium- oder Kalium-2,4,6-trichlorbenzoat, Natrium- oder Kalium-2,4-dichlorbenzoat, Lithiumphenylphosphonat, Natrium- oder Kalium-diphenylsulfonsulfonat, Natrium- oder Kalium-2-formylbenzolsulfonat, Natrium- oder Kalium-(N-benzolsulfonyl)-benzolsulfonamid. Trinatrium-oder Trikalium-hexafluoroaluminat, Dinatrium- oder Dikaliumhexafluorotitanat, Dinatrium- oder Dikalium-hexafluorosilikat, Dinatrium- oder Dikaliumhexafluorozirkonat, Natrium- oder Kaliumpyrophosphat, Natrium- oder Kaliummetaphosphat, Natrium- oder Kaliumtetrafluoroborat, Natrium- oder Kaliumhexafluorophosphat, Natrium- oder Kalium- oder Lithiumphosphat, N-(p-tolylsulfonyl-)-p-toluolsulfimid-Kaliumsalz, N-(N'-Benzyl¬amino¬carbonyl)-sulfanylimid-Kaliumsalz.

Bevorzugt werden Natrium- oder Kaliumperfluorbutansulfat, Natrium- oder Kaliumperfluoroctansulfat, Natrium- oder Kalium-diphenylsulfonsulfonat und Natrium oder Kalium-2,4,6-trichlorbenzoat und N-(p-Tolylsulfonyl-)-p-toluolsulfimid-Kaliumsalz, N-(N'-Benzylaminocabonyl)-sulfanylimid-Kaliumsalz. Ganz besonders bevorzugt sind Kalium-nona-fluor-1-butansulfonat und Natrium- oder Kalium-diphenylsulfonsulfonat. Kalium-nona-fluor-1-butansulfonat ist u.a. als Bayowet®C4 (Firma Lanxess, Leverkusen, Deutschland, CAS-Nr. 29420-49-3), RM64 (Firma Miteni, Italien) oder als 3M™ Perfluorobutanesulfonyl Fluoride FC-51 (Firma 3M, USA) kommerziell erhältlich. Ebenfalls sind Mischungen der genannten Salze geeignet. Kalium-nona-fluor-1-butansulfonat wird besonders bevorzugt eingesetzt.

### Komponente C)

Die Komponente C im Sinne der vorliegenden Erfindung ist ein kautschukfreies anhydridmodifiziertes alpha-Olefin-Terpolymer, wobei das Anhydrid ein ungesättigtes Carbonsäureanhydrid ist.

Das Anhydrid ist vorzugsweise ausgewählt aus der Gruppe, die Maleinsäureanhydrid, Phthalsäureanhydrid, Fumarsäureanhydrid und Itaconsäureanhydrid sowie deren Mischungen umfaßt.

Besonders bevorzugt ist das Anhydrid Maleinsäureanhydrid.

Das alpha-Olefin-Terpolymer enthält vorzugsweise Bausteine ausgewählt aus der Gruppe, die besteht aus Ethylen, 1-Propen, 1-Buten, 1-Isobuten, 1-Penten, 1-Hexen, 1-Hepten, 1-Octen, 1-Nonen, 1-Decen, 1-Undecen, 1-Dodecen, 1-Tridecen, 1-Tetradecen, 1-Octadecen, 1-Nonadecen, sowie Gemische aus diesen.

Besonders bevorzugt enthält das Terpolymer als Bausteine Ethylen, 1-Propen und 1-Octen.

Das kautschukfreie anhydridmodifizierte Terpolymer ist dadurch charakterisiert, dass die Zusammensetzung
C1) 90,0-98,0 Gew.-%, vorzugsweise 92,0-97,5 Gew.-%, besonders bevorzugt 94,0-97,0 Gew.-% Terpolymer und
C2) 2,0-10,0 Gew.-%, vorzugsweise 2,5-8,0 Gew.-%, und besonders bevorzugt 3,0-6,0 Gew.-% Anhydrid enthält.

Das kautschukfreie anhydridmodifizierte Terpolymer hat vorzugsweise ein Molekulargewicht Mw von 2000-10000 g/mol, bevorzugt 2500-8000 g/mol, besonders bevorzugt 3000-6000 g/mol bestimmt durch GPC (Gelpermeationschromatographie) in Trichlorbenzol als Lösungsmittel mit Polystyrol als Standard.

Der olefinische Teil C1) des anhydridmodifizierten Terpolymers ist bevorzugt dadurch gekennzeichnet, dass
der Ethylenanteil 96,0-80,0 Gew.-%, weiter bevorzugt 92,0-84,0 Gew.-%;
der Propylenanteil 2,0-10,0 Gew.-%, weiter bevorzugt 4,0-8,0 Gew.-%; und
der Octenanteil 2,0-10,0 Gew.-%, weiter bevorzugt 4,0-8,0 Gew.-%, ist.

### Komponente D)

### Füllstoffe im Sinne der vorliegenden Erfindung sind Glasfasern

Bevorzugt werden Schnittglasfasern verwendet, die aus M-, E-, A-, S-, R- oder C-Glas herstellt werden, wobei E-, oder C-Glas weiter bevorzugt sind.

Der Durchmesser der Fasern beträgt bevorzugt 5 bis 25 µm, weiter bevorzugt 6 bis 20 µm, besonders bevorzugt 7 bis 17 µm.

Die Schnittglasfasern weisen vor Compoundierung bevorzugt eine Länge von 3 mm bis 6 mm auf.

Die verwendeten Glasfasern zeichnen sich dadurch aus, dass die Auswahl der Faser nicht durch die Wechselwirkungscharakteristik der Faser mit der Polycarbonatmatrix beschränkt ist.

Sowohl für eine starke Anbindung an die Polymermatrix, als auch bei einer nicht-anbindenden Faser zeigt eine Verbesserung der erfindungsgemäßen Eigenschaften der Zusammensetzungen.

Eine starke Anbindung der Glasfaser an die Polymermatrix ist an den Tieftemperaturbruchoberflächen bei rasterelektronenmikroskopischen Aufnahmen zu erkennen, wobei die größte Anzahl der gebrochenen Glasfasern auf derselben Höhe wie die Matrix gebrochen sind und nur vereinzelt Glasfasern aus der Martix herausstehen. Rasterelektronenmikroskopische Aufnahmen zeigen für den umgekehrten Fall der nicht-anbindenen Charakteristik, dass die Glasfasern im Tieftemperaturbruch aus der Matrix stark herausstehen oder vollständig herausgeglitten sind.

### Komponente E

Die verwendeten Entformungsmittel E) sind Ester aliphatischer langkettiger Carbonsäuren mit ein-oder mehrwertigen aliphatischen und/oder aromatischen Hydroxyverbindungen. Besonders bevorzugt verwendete aliphatische Carbonsäureester sind Verbindungen der allgemeinen Formel (III):

(R₄-CO**-**O)ₒ₋R₅-(OH)ₚ mit o = 1 bis 4 und p = 3 bis 0 (III)

wobei R4 ein aliphatischer gesättigter oder ungesättigter, linearer, cyclischer oder verzweigter Alkylrest ist und R5 ein Alkylenrest eines 1- bis 4-wertigen aliphatischen Alkohols R5-(OH)o+p ist.

Besonders bevorzugt für R4 sind C1-C18 Alkylreste. C1-C18-Alkyl steht beispielsweise für Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl, Cyclohexyl, Cyclopentyl, n-Hexyl, 1,1-Dimethylpropyl, 1,2-Dimethylpropyl, 1-Methylpentyl, 2-Methylpentyl, 3 -Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl oder 1-Ethyl-2-methylpropyl, n-Heptyl und n-Octyl, Pinakyl, Adamantyl, die isomeren Menthyle, n-Nonyl, n-Decyl, n-Dodecyl, n-Tridecyl, n-Tetradecyl, n-Hexadecyl oder n-Octadecyl.

Alkylen steht für einen geradkettigen, zyklischen, verzweigten oder unverzweigten C1-C18 Alkylen-Rest. C1-C18-Alkylen steht beispielsweise für Methylen, Ethylen, n-Propylen, isoPropylen, n-Butyen, n-Pentylen, n-Hexylen, n-Heptylen, n-Octylen, n-Nonylen, n-Decylen, n-Dodecylen, n-Tridecylen, n-Tetradecylen, n-Hexadecylen oder n-Octadecylen.

Bei Estern von mehrwertigen Alkoholen können auch freie, nicht veresterte OH-Gruppen vorhanden sein. Erfindungsgemäß geeignete aliphatische Carbonsäureester sind z.B.: Glycerinmonostearat, Palmitylpalmitat und Stearylstearat. Es können auch Gemische verschiedener Carbonsäureester der Formel (III) eingesetzt werden. Bevorzugt verwendete Carbonsäureester sind Ester von Pentaerythrit, Glycerin, Trimethylolpropan, Propandiol, Stearylalkohol, Cetylalkohol oder Myristylalkohol mit Myristin-, Palmitin-, Stearin- oder Montansäure und Gemische daraus. Besonders bevorzugt sind Pentaerythrittetrastearat, Stearylstearat und Propandioldistearat, bzw. Gemische, daraus und am stärksten bevorzugt Pentaerythrittetrastearat.

Als Antitropfmittel der Komponente (F) kann den Formmassen zusätzlich Polytetrafluorethylen (PTFE) zugefügt werden. Letzteres ist in diversen Produktqualitäten kommerziell verfügbar. Hierzu zählen Additive wie Hostafion® TF2021 oder aber PTFE-Blends wie Metablen® A-3800 (ca. 40% PTFE CAS 9002-84-0 und ca. 60 % Methylmethacrylat/Butylacrylat Copolymer CAS 25852-37-3 von Misubishi-Rayon) oder Blendex® B449 (ca. 50% PTFE und ca. 50 % SAN [aus 80 % Styrol und 20 % Acrylnitril]) der Firma Chemtura. Bevorzugt wird Blendex® B449 verwendet.

Optional können der Zusammensetzungen als weiteres Additiv (G) spezielle UV-Stabilisatoren zugesetzt werden, die eine möglichst geringe Transmission unterhalb 400 nm und eine möglichst hohe Transmission oberhalb von 400 nm besitzen. Für den Einsatz in der erfindungsgemäßen Zusammensetzung besonders geeignete Ultraviolett-Absorber sind Benzotriazole, Triazine, Benzophenone und/oder arylierte Cyanoacrylate.

Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin^{®} 234, BASF, Ludwigshafen), 2-(2'-Hydroxy-5'-(tert.-octyl)-phenyl)-benzotriazol (Tinuvin^{®} 329, BASF, Ludwigshafen), 2-(2'-Hydroxy-3'-(2-butyl)-5'-(tert.butyl)-phenyl)-benzotriazol (Tinuvin^{®} 350, BASF, Ludwigshafen), Bis-(3-(2H-benztriazolyl)-2-hydroxy-5-tert.-octyl)methan, (Tinuvin^{®} 360, BASF, Ludwigshafen), (2-(4,6-Diphenyl-1,3,5-triazin-2-yl)-5-(hexyloxy)-phenol (Tinuvin^{®} 1577, BASF, Ludwigshafen), sowie der Benzophenone 2,4-Dihydroxy-benzophenon (Chimasorb^{®} 22 , BASF, Ludwigshafen) und 2-Hydroxy-4-(octyloxy)-benzophenon (Chimassorb^{®} 81, BASF, Ludwigshafen), 2-Propenoic acid, 2-Cyano-3,3-diphenyl-, 2,2-Bis[[(2-cyano-1-oxo-3,3-diphenyl-2-propenyl)oxy]-methyl]-1,3-propanediylester (9CI) (Uvinul^{®} 3030, BASF AG Ludwigshafen), 2-[2-Hydroxy-4-(2-ethylhexyl)oxy]phenyl-4,6-di(4-phenyl)phenyl-1,3,5-triazine (CGX UVA 006, BASF, Ludwigshafen), Tetra-ethyl-2,2'-(1,4-phenylene-dimethylidene)-bismalonate (Hostavin® B-Cap, Clariant AG) oder N-(2-ethoxyphenyl)-N'-(2-ethylphenyl)-Ethanediamide (Tinuvin® 312, CAS-Nr. 23949-66-8, BASF, Ludwigshafen)

Besonders bevorzugte spezielle UV-Stabilisatoren sind beispielsweise Tinuvin® 360, Tinuvin® 329, Tinuvin® 312, besonders bevorzugt TIN 329 und Tinuvin® 312.

Es können auch Mischungen dieser Ultraviolett-Absorber eingesetzt werden.

Gemäß einer speziellen Ausführungsform der Erfindung enthält die Zusammensetzung Ultraviolett-Absorber in einer Menge von 0 ppm bis 6000 ppm, bevorzugt 500 ppm bis 5000 ppm, und weiter bevorzugt 1000 ppm bis 2000 ppm bezogen auf die Gesamtzusammensetzung.

Die erfindungsgemäßen Polymer-Zusammensetzungen können neben den erfindungsgemäßen Stabilisatoren optional noch weitere übliche Polymeradditive als Komponente G) enthalten, welche ausgewählt sind aus der Gruppe der Antioxidantien, Thermostabilisatoren, optischen Aufheller und Lichtstreumittel in den für die jeweiligen Thermoplasten üblichen Mengen. Diese sind z.B. in EP-A 0 839 623, WO-A 96/15102, EP-A 0 500 496 oder "Plastics Additives Handbook", Hans Zweifel, 5th Edition 2000, Hanser Verlag, München) beschrieben.

Ferner können die erfindungsgemäßen Polymer-Zusammensetzungen Pigmente und/oder Farbstoffe in den üblichen Mengen als Komponente G) enthalten.

Als Thermostabilisatoren gemäß Komponente (G), eignen sich bevorzugt Triphenylphosphin, Tris-(2,4-di-tert-butylphenyl)phosphit (Irgafos 168), Tetrakis-(2,4-di-tert.-butylphenyl)-[1,1 biphenyl]-4,4'-diylbisphosphonit, Trisoctylphosphat, Octadecyl-3-(3,5-di-tert-butyl-4-hydroxyphenyl)-propionat (Irganox 1076), Bis-(2,4-dicumylphenyl)-pentaerythritoldiphosphit (Doverphos S-9228), Bis-(2,6-di-tert.butyl-4-methylphenyl)-pentaerythritoldiphosphit (ADK STAB PEP-36). Sie werden allein oder im Gemisch (z. B. Irganox B900 (Gemisch aus Irganox 168 und Irganox 1076 im Verhältnis 1:3) oder Doverphos S-92228 mit Irganox B900 bzw. Irganox 1076) eingesetzt.

Die Herstellung der erfindungsgemäßen Polymer-Zusammensetzungen enthaltend die Komponenten A) bis G) erfolgt mit gängigen Einarbeitungsverfahren durch Zusammenführung, Vermischen und Homogenisieren der einzelnen Bestandteile, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen.

Es können auch Vormischungen aus Granulaten oder Granulaten und Pulvern mit den erfindungsgemäßen Zusätzen verwendet werden.

Es können auch Vormischungen verwendet werden, die aus Lösungen der Mischungskomponenten in geeigneten Lösungsmitteln, wobei gegebenenfalls in Lösung homogenisiert wird und das Lösungsmittel anschließend entfernt wird, hergestellt worden sind.

Insbesondere können hierbei die Additive der erfindungsgemäßen Zusammensetzung durch bekannte Verfahren oder als Masterbatch eingebracht werden.

Die Verwendung von Masterbatchen ist insbesondere zum Einbringen der Additive bevorzugt, wobei insbesondere Masterbatche auf Basis der jeweiligen Polymermatrix verwendet werden.

In diesem Zusammenhang kann die Zusammensetzung in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden.

Die Zusammenführung und Durchmischung einer Vormischung in der Schmelze kann auch in der Plastifiziereinhiet einer Spritzgußmaschine erfolgen. Hierbei wird die Schmelze im anschließenden Schritt direkt in einen Formkörper überführt.

Die Herstellung der Kunststoffformteile kann vorzugsweise durch Spritzguß erfolgen.

Von Interesse ist auch die Verwendung der erfindungsgemäßen Kunststoffzusammensetzung zur Herstellung von Mehrschichtsystemen. Hierbei wird die erfindungsgemäße Kunststoffzusammensetzung in einer oder mehreren Schicht(en) auf einen geformten Gegenstand aus einem Kunststoff aufgebracht. Das Aufbringen kann zugleich mit oder unmittelbar nach der Formgebung des Formkörpers geschehen, zum Beispiel durch Hinterspritzen einer Folie, Coextrusion oder Mehrkomponentenspritzguß. Das Aufbringen kann aber auch auf den fertig geformten Grundkörper geschehen, z.B. durch Lamination mit einem Film, Umspritzen eines vorhandenen Formkörpers oder durch Beschichtung aus einer Lösung.

Ferner betrifft die vorliegende Erfindung die Verwendung von kautschukfreien anhydridmodifizierten alpha-Olefin-Terpolymeren gemäß Komponente C) zur Erhöhung der Schlagzähigkeit von Polycarbonatzusammensetzungen, die gleichzeitig eine Kombination aus hoher Steifigkeit, gutem thermischen und rheologischem Verhalten und einer Flammwidrigkeit von UL94 V0 bis minimal 1,0 mm Wandstärke aufweisen, sowie die Zusammensetzungen selbst.

### Beispiele

### Komponente A

Lineares Polycarbonate auf Basis Bisphenol-A mit einem MVR von 15 (gemäß ISO 1133, bei 300°C und 1,2 kg Belastung).

### Komponente B

Kaliumperfluor-1-butansulfonat kommerziell erhältlich als Bayowet® C4 der Firma Lanxess, Leverkusen, Deutschland, CAS-Nr. 29420-49-3.

### Komponente C

Ethylen-Propylen-Octen-Maleinsäureanhydrid-Copolymer (Ethylen:Propylen:Octen 87:6:7), CAS-Nr. 31069-12-2, mit Molekulargewicht Mw 5000 g/mol, Dichte 940 kg/m³, Säurezahl 60 mg KOH/g, Maleinsäureanhydridanteil 4,4% bezogen auf das Copolymer C.

### Komponente D-1

CS 7968, geschnittene Kurzglasfasern (anbindend) der Firma Lanxess AG mit einem durchschnittlichen Faserdurchmesser von 11 µm und einer durchschnittlichen Faserlänge von 4,5 mm.

### Komponente D-2

CS108F-14P, geschnittene Kurzglasfasern (nicht anbindend) der Firma 3B mit einem durchschnittlichen Faserdurchmesser von 14 µm, einer durchschnittlichen Faserlänge von 4,0 mm.

### Komponente E

### Pentaerythrittetrastearat als Gleit-/Entformungsmittel

### Komponente F

Polytetrafluorethylen (Blendex® B449 (ca. 50% PTFE und ca. 50 % SAN [aus 80 % Styrol und 20 % Acrylnitril] der Firma Chemtura).

Die Schlagzähigkeit nach Charpy wurde nach ISO 179/1eU an einseitig angespritzten Prüfstäben der Dimension 80 x 10 x 4 mm bei RT und -40°C gemessen.

Der Vicat B/50 als Maß für die Wärmeformbeständigkeit wird bestimmt gemäß ISO 306 an Prüfkörpern der Abmessung 80 x 10 x 4 mm mit einer Stempellast von 50 N und einer Aufheizgeschwindigkeit von 50°C/h.

Die mittlere Teilchengröße d₅₀ ist der Durchmesser, oberhalb und unterhalb dessen jeweils 50 Gew.-% der Teilchen liegen.

Die maximale Teilchengröße d₉₅ ist der Durchmesser, unterhalb dessen 95 Gew.-% der Teilchen liegen.

Die entsprechenden Durchmesser wurden durch Windsichten bestimmt.

Das Brandverhalten wird nach UL 94V an Stäben der Abmessung 127 x 12,7 x 1,0 mm, 127 x 12,7 x 1,2 mm, 127 x 12,7 x 1,5 mm gemessen.

Der E-Modul und die Bruchdehnung wurden gemäß ISO 527 an einem einseitig angespritzten Schulterstäben mit einem Kern der Dimension 80 x 10 x 4 mm gemessen.

Die Bestimmung des Schmelzvolumenrate (MVR) erfolgt nach ISO 1133 (bei 300 °C; 1,2 kg).

Die Bestimmung der Kennwerte des Durchstoßexperimentes erfolgt bei -20°C nach ISO 6603-2 an Prüfplatten von 60mm x 60mm x 2 mm.

| Beispiel | 1 (Vgl) | 2 | 3(Vgl) | 4 |
|---|---|---|---|---|
| A w.t. % | 92,2 | 91,7 | 92,2 | 91,7 |
| B w.t. % | 0,2 | 0,2 | 0,2 | 0,2 |
| C w.t. % | | 0,5 | | 0,5 |
| D-1 w.t. % | | | 7,0 | 7,0 |
| D-2 w.t. % | 7,0 | 7,0 | | |
| E w.t. % | 0,3 | 0,3 | 0,3 | 0,3 |
| F w.t. % | 0,3 | 0,3 | 0,3 | 0,3 |
| MVR[cm³/10min] | 15,80 | 14,30 | 16,50 | 13,90 |
| VICAT | 145,4 | 144,9 | 146,8 | 146 |
| Charpy-Schlagzähigkeit RT kJ/mm² | 161 | 178 | 95 | 114 |
| Charpy-Schlagzähigkeit -40°C kJ/mm² | 90 | 104 | 59 | 80 |
| E-Modul[N/mm²] | 3156 | 3344 | 3215 | 3158 |
| Duchstoß -20°C | | | | |
| Maximalkraft FM **[N]** | 4032 | 4189 | 3060 | 4110 |
| Verformung bei FM **[mm]** | 10,5 | 10,9 | 7,4 | 10,2 |
| Energie bei FM **[J]** | 17,2 | 18,9 | 8 | 17,3 |
| Gesamtenergie **[J]** | 19 | 20,9 | 9,2 | 19,2 |
| Gesamtverformung [mm] | 11 | 11,5 | 8 | 10,8 |
| UL 94 V 1,0 mm Bewertung | V0 | V0 | V0 | V0 |
| UL 94 V 1,2 mm Bewertung | V0 | V0 | V0 | V0 |
| UL 94 V 1,5mm Bewertung | V0 | V0 | V0 | V0 |

## Patentansprüche

1. Flammwidrige, thermoplastische Formmassen enthaltend
A) 41,500 bis 94,749 Gew.-Teile mindestens eines aromatischen Polycarbonats,
B) 0,001 bis 1,000 Gew.-Teile mindestens eines Flammschutzmittels, ausgewählt aus der Gruppe der Alkalisalze von aliphatischen/aromatischen Sulfonsäure-, Sulfonamid- und Sulfonimidderivaten sowie der Erdalkalisalze von aliphatischen/aromatischen Sulfonsäure-, Sulfonamid- und Sulfonimidderivaten, Natrium- oder Kaliumperfluorbutansulfat, Natrium- oder Kaliumperfluoroctansulfat, Natrium- oder Kalium-2,5-dichlorbenzolsulfat, Natrium- oder Kalium-2,4,5-trichlorbenzolsulfat, Natrium- oder Kaliummethylphosphonat, Natrium- oder Kalium-(2-phenylethylen)-phosphonat, Natrium- oder Kaliumpentachlorbenzoat, Natrium- oder Kalium-2,4,6-trichlorbenzoat, Natrium- oder Kalium-2,4-dichlorbenzoat, Lithiumphenylphosphonat, Trinatrium- oder Trikaliumhexafluoroaluminat, Dinatrium- oder Dikaliumhexafluorotitanat, Dinatrium- oder Dikalium-hexafluorosilikat, Dinatrium- oder Dikaliumhexafluorozirkonat, Natrium- oder Kaliumpyrophosphat, Natrium- oder Kaliummetaphosphat, Natrium- oder Kaliumtetrafluoroborat, Natrium- oder Kaliumhexafluorophosphat, Natrium- oder Kalium- oder Lithiumphosphat,
C) 0,20 bis 1,50 Gew.-Teile mindestens eines kautschukfreien anhydrid-modifizierten alpha-Olefin-Terpolymers,
D) 5,0 bis 40,0 Gew.-Teile mindestens einer Glasfaser
E) 0,00 Gew.-Teile bis 1,00 Gew.-Teile mindestens eines Entformungsmittels,
F) 0,05 Gew.-Teile bis 5,00 Gew.-Teile mindestens eines Antidrippingmittels,
G) 0,0 - 10,0 Gew.-Teile, weiterer übliche Additive, ausgewählt aus der Gruppe der Antioxidantien, Thermostabilisatoren, optischen Aufheller und Lichtstreumittel,
wobei die Summe der Gewichtsteile der Komponenten A) bis G) sich zu 100 Gewichtsteilen addiert.

2. Formmassen gemäß Anspruch 1, **dadurch gekennzeichnet, dass** Komponente D) in einem Anteil von 7,0 bis 20,0 Gew.-Teilen enthalten ist.

3. Formmassen gemäß Anspruch 1 oder 2, **dadurch gekennzeichnet, dass** Komponente G) in einem Anteil von 0,20 bis 3,0 Gew.-Teilen enthalten ist.

4. Formmassen gemäß einem der Ansprüche 1 bis 3, **dadurch gekennzeichnet, dass** Komponente C) in einem Anteil von 0,40 bis 0,60 Gew.-Teilen enthalten ist.

5. Formmassen nach einem der vorhergehenden Ansprüche, **dadurch gekennzeichnet, dass** das Anhydrid ausgewählt ist aus der Gruppe, die Maleinsäureanhydrid, Phthalsäureanhydrid, Fumarsäureanhydrid und Itaconsäureanhydrid sowie deren Mischungen umfasst.

6. Formmassen gemäß Anspruch 5, **dadurch gekennzeichnet, dass** das Anhydrid Maleinsäureanhydrid ist.

7. Formmassen gemäß Anspruch 5 oder 6, **dadurch gekennzeichnet, dass** das alpha-Olefin-Terpolymer Bausteine enthält ausgewählt aus der Gruppe, die aus Ethylen, 1-Propen, 1-Buten, 1-Isobuten, 1-Penten, 1-Hexen, 1-Hepten, 1-Octen, 1-Nonen, 1-Decen, 1-Undecen, 1-Dodecen, 1-Tridecen, 1-Tetradecen, 1-Octadecen, 1-Nonadecen, sowie Gemische aus diesen besteht.

8. Formmassen gemäß Anspruch 5, **dadurch gekennzeichnet, dass** das kautschukfreie anhydridmodifizierte Terpolymer
E1) 90,0-98,0 Gew.-% Terpolymer und
E2) 2,0-10,0 Gew.-% Anhydrid
enthält.

9. Formmassen gemäß einem der vorhergehenden Ansprüche, **dadurch gekennzeichnet, dass** das Terpolymer aus Ethylen-, 1-Propen- und 1-Octen-Bausteinen besteht.

10. Formmassen gemäß Anspruch 8 oder 9, **dadurch gekennzeichnet, dass** der olefinische Teil E1) des anhydridmodifizierten Terpolymers **dadurch gekennzeichnet ist, dass**
der Ethylenanteil 96,0-80,0 Gew.-%;
der Propylenanteil 2,0-10,0 Gew.-%; und
der Octenanteil 2,0-10,0 Gew.-% ist.

11. Formmassen gemäß einem der vorhergehenden Ansprüche, **dadurch gekennzeichnet, dass** das kautschukfreie anhydridmodifizierte Terpolymer ein Molekulargewicht Mw von 2000-10000 g/mol besitzt.

12. Formmassen nach einem der vorhergehenden Ansprüche, **dadurch gekennzeichnet, dass** die Glasfaser eine Schnittglasfaser ist.

13. Formmassen nach Anspruch 12, **dadurch gekennzeichnet, dass** die Schnittglasfaser aus E-, oder C-Glas herstellt ist, einen Faserdurchmesser von 5 bis 25 µm µm aufweist und die Schnittglasfasern vor Compoundierung bevorzugt eine Länge von 3 mm bis 6 mm aufweisen.

14. Formmassen nach einem der vorhergehenden Ansprüche, **dadurch gekennzeichnet, dass** das Flammschutzmittel ausgewählt ist aus der Gruppe, die Natrium- und Kaliumperfluorbutansulfat, Natrium- und Kaliumperfluoroctansulfat, Natrium- und Kalium-diphenylsulfonsulfonat und Natrium und Kalium-2,4,6-trichlorbenzoat sowie N-(p-Tolylsulfonyl-)-p-toluolsulfimid-Kaliumsalz, und N-(N'-Benzylaminocabonyl)-sulfanylimid-Kaliumsalz umfasst.

## Claims

1. Flame-resistant, thermoplastic moulding compositions comprising
A) 41.500 to 94.749 parts by wt. of at least one aromatic polycarbonate,
B) 0.001 to 1.000 part by wt. of at least one flameproofing agent chosen from the group of the alkali metal and alkaline earth metal salts of aliphatic or aromatic sulfonic acid, sulfonamide and sulfonimide derivatives, sodium or potassium perfluorobutane-sulfate, sodium or potassium perfluorooctane-sulfate, sodium or potassium 2,5-dichlorobenzenesulfate, sodium or potassium 2,4,5-trichlorobenzene-sulfate, sodium or potassium methyl-phosphonate, sodium or potassium (2-phenylethylene)-phosphonate, sodium or potassium pentachlorobenzoate, sodium or potassium 2,4,6-trichlorobenzoate, sodium or potassium 2,4-dichlorobenzoate, lithium phenyl-phosphonate, trisodium or tripotassium hexafluoroaluminate, disodium or dipotassium hexafluorotitanate, disodium or dipotassium hexafluorosilicate, disodium or dipotassium hexafluorozirconate, sodium or potassium pyrophosphate, sodium or potassium metaphosphate, sodium or potassium tetrafluoroborate, sodium or potassium hexafluorophosphate, sodium or potassium or lithium phosphate,
C) 0.20 to 1.50 parts by wt. of at least one rubber-free anhydride-modified alpha-olefin terpolymer,
D) 5.0 to 40.0 parts by wt. of at least one glass fibre,
E) 0.00 part by wt. to 1.00 part by wt. of at least one mould release agent,
F) 0.05 part by wt. to 5.00 parts by wt. of at least one antidripping agent,
G) 0.0 - 10.0 parts by wt. of further conventional additives chosen from the group of the antioxidants, heat stabilizers, optical brighteners and light-scattering agents,
wherein the sum of the parts by weight of components A) to G) adds up to 100 parts by weight.

2. Moulding compositions according to claim 1, **characterized in that** they comprise component D) in a content of from 7.0 to 20.0 parts by wt.

3. Moulding compositions according to claim 1 or 2, **characterized in that** they comprise component G) in a content of from 0.20 to 3.0 parts by wt.

4. Moulding compositions according to one of claims 1 to 3, **characterized in that** they comprise component C) in a content of from 0.40 to 0.60 parts by wt.

5. Moulding compositions according to one of the preceding claims, **characterized in that** the anhydride is chosen from the group which includes maleic anhydride, phthalic anhydride, fumaric anhydride and itaconic anhydride and mixtures thereof.

6. Moulding compositions according to claim 5, **characterized in that** the anhydride is maleic anhydride.

7. Moulding compositions according to claim 5 or 6, **characterized in that** the alpha-olefin terpolymer comprises units chosen from the group which consists of ethylene, 1-propene, 1-butene, 1-isobutene, 1-pentene, 1-hexene, 1-heptene, 1-octene, 1-nonene, 1-decene, 1-undecene, 1-dodecene, 1-tridecene, 1-tetradecene, 1-octadecene, 1-nonadecene and mixtures of these.

8. Moulding compositions according to claim 5, **characterized in that** the rubber-free anhydride-modified terpolymer comprises
E1) 90.0 - 98.0 wt.% of terpolymer and
E2) 2.0 - 10.0 wt.% of anhydride.

9. Moulding compositions according to one of the preceding claims, **characterized in that** the terpolymer consists of units of ethylene, 1-propene and 1-octene.

10. Moulding compositions according to claim 8 or 9, **characterized in that** the olefinic part E1) of the anhydride-modified terpolymer is **characterized in that**
the ethylene content is 96.0 - 80.0 wt.%;
the propylene content is 2.0 - 10.0 wt.%; and
the octene content is 2.0 - 10.0 wt.%.

11. Moulding compositions according to one of the preceding claims, **characterized in that** the rubber-free anhydride-modified terpolymer has a molecular weight Mw of 2,000 - 10,000 g/mol.

12. Moulding compositions according to one of the preceding claims, **characterized in that** the glass fibre is a cut glass fibre.

13. Moulding compositions according to claim 12, **characterized in that** the cut glass fibre is produced from E- or C-glass and has a fibre diameter of from 5 to 25 µm and the cut glass fibres preferably have a length before the compounding of from 3 mm to 6 mm.

14. Moulding compositions according to one of the preceding claims, **characterized in that** the flameproofing agent is chosen from the group which includes sodium and potassium perfluorobutane-sulfate, sodium and potassium perfluorooctane-sulfate, sodium and potassium diphenyl sulfone-sulfonate and sodium and potassium 2,4,6-trichlorobenzoate and also N-(p-tolylsulfonyl)-p-toluenesulfimide potassium salt and N-(N'-benzylaminocarbonyl)-sulfanylimide potassium salt.

## Revendications

1. Masses de moulage thermoplastiques, ignifuges, contenant
A) 41,500 à 94,749 parties en poids d'au moins un polycarbonate aromatique,
B) 0,001 à 1,000 partie en poids d'au moins un agent ignifuge, choisi dans le groupe formé par les sels de métal alcalin de dérivés aliphatiques/aromatiques d'acide sulfonique, de sulfonamide ou de sulfonimide ainsi que les sels de métal alcalino-terreux de dérivés aliphatiques/aromatiques d'acide sulfonique, de sulfonamide et de sulfonimide, le perfluorobutanesulfate de sodium ou de potassium, le perfluorooctanesulfate de sodium ou de potassium, le 2,5-dichlorobenzènesulfate de sodium ou de potassium, le 2,4,5-trichlorobenzènesulfate de sodium ou de potassium, le méthylphosphonate de sodium ou de potassium, le (2-phényléthylène)-phosphonate de sodium ou de potassium, le pentachlorobenzoate de sodium ou de potassium, le 2,4,6-trichorobenzoate de sodium ou de potassium, le 2,4-dichlorobenzoate de sodium ou de potassium, le phénylphosphonate de lithium, l'hexafluoroaluminate trisodique ou tripotassique, l'hexafluorotitanate disodique ou dipotassique, l'hexafluorosilicate disodique ou dipotassique, l'hexafluorozirconate disodique ou dipotassique, le pyrophosphate de sodium ou de potassium, le métaphosphate de sodium ou de potassium, le tétrafluoroborate de sodium ou de potassium, l'hexafluorophosphate de sodium ou de potassium, le phosphate de sodium ou de potassium ou de lithium,
C) 0,20 à 1,50 partie en poids d'au moins un terpolymère alpha-oléfinique modifié par anhydride, exempt de caoutchouc,
D) 5,0 à 40,0 parties en poids d'au moins une fibre de verre,
E) 0,00 partie en poids à 1,00 partie en poids d'au moins un agent de démoulage,
F) 0,05 partie en poids à 5,00 parties en poids d'au moins un agent antigoutte,
G) 0,0 - 10,0 parties en poids d'autres additifs usuels, choisis dans le groupe des antioxydants, des stabilisants thermiques, des azurants optiques et des agents de dispersion de la lumière,
la somme des parties en poids des composants A) à G) valant 100 parties en poids.

2. Masses de moulage selon la revendication 1, **caractérisées en ce que** le composant D) est contenu en une proportion de 7,0 à 20,0 parties en poids.

3. Masses de moulage selon la revendication 1 ou 2, **caractérisées en ce que** le composant G) est contenu en une proportion de 0,20 à 3,0 parties en poids.

4. Masses de moulage selon l'une quelconque des revendications 1 à 3, **caractérisées en ce que** le composant C) est contenu en une proportion de 0,40 à 0,60 partie en poids.

5. Masses de moulage selon l'une quelconque des revendications précédentes, **caractérisées en ce que** l'anhydride est choisi dans le groupe comprenant l'anhydride de l'acide maléique, l'anhydride de l'acide phtalique, l'anhydride de l'acide fumarique et l'anhydride de l'acide itaconique ainsi que leurs mélanges.

6. Masses de moulage selon la revendication 5, **caractérisées en ce que** l'anhydride est l'anhydride de l'acide maléique

7. Masses de moulage selon la revendication 5 ou 6, **caractérisées en ce que** le terpolymère alpha-oléfinique contient des éléments choisis dans le groupe constitué par l'éthylène, le 1-propène, le 1-butène, le 1-isobutène, le 1-pentène, le 1-hexène, le 1-heptène, le 1-octène, le 1-nonène, le 1-décène, le 1-undécène, le 1-dodécène, le 1-tridécène, le 1-tétradécène, le 1-octadécène, le 1-nonadécène ainsi que leurs mélanges.

8. Masses de moulage selon la revendication 5, **caractérisées en ce que** le terpolymère modifié par anhydride, exempt de caoutchouc contient
E1) 90,0-98,0% en poids de terpolymère et
E2) 2,0-10,0% en poids d'anhydride.

9. Masses de moulage selon l'une quelconque des revendications précédentes, **caractérisées en ce que** le terpolymère est constitué d'éléments d'éthylène, de 1-propène et de 1-octène.

10. Masses de moulage selon la revendication 8 ou 9, **caractérisées en ce que** la partie oléfinique E1) du terpolymère modifié par anhydride est **caractérisée en ce que**
la proportion d'éthylène est de 96,0-80,0% en poids ;
la proportion de propylène est de 2,0-10,0% en poids ; et
la proportion d'octène est de 2,0-10,0% en poids.

11. Masses de moulage selon l'une quelconque des revendications précédentes, **caractérisées en ce que** le terpolymère modifié par anhydride, exempt de caoutchouc présente un poids moléculaire M_{w} de 2000-10.000 g/mole.

12. Masses de moulage selon l'une quelconque des revendications précédentes, **caractérisées en ce que** la fibre de verre est une fibre de verre coupée.

13. Masses de moulage selon la revendication 12, **caractérisées en ce que** la fibre de verre coupée est fabriquée à partir de verre E ou de verre C, présente un diamètre de fibre de 5 à 25 µm et les fibres de verre coupées présentent de préférence une longueur de 3 mm à 6 mm avant le compoundage.

14. Masses de moulage selon l'une quelconque des revendications précédentes, **caractérisées en ce que** l'agent ignifuge est choisi dans le groupe comprenant le perfluorobutanesulfate de sodium ou de potassium, le perfluorooctanesulfate de sodium ou de potassium, le diphénylsulfonesulfonate de sodium ou de potassium et le 2,4,6-trichlorobenzoate de sodium ou de potassium ainsi que le sel potassique du N-(p-toluylsulfonyl)-p-toluènesulfimide et le sel potassique du N-(N'-benzylaminocarbonyl)-sulfanylimide.
